# EUROPEAN PATENT APPLICATION

(11) **EP 4 793 093 A1**
(43) Date of publication of application: **19.08.2026**
(21) Application number: 25224932.1
(22) Date of filing: 18.12.2025
(51) Int. Cl.: B60P 7/08, F16G 3/00

(54) **TENSIONING ASSEMBLY FOR TENSIONING CHAINS**

(30) Priority: 18.12.2024 BE 202405910
(71) Applicant: International Lashing Systems NV, 2030 Antwerpen (BE)
(72) Inventor: SINNAEVE, Jimmy, 2030 ANTWERPEN (BE)
(74) Representative: Arnold & Siedsma

(57) **Abstract**

A tensioning assembly for tensioning at least one chain, consisting of a chain tensioner with a chain tensioner body and a first fastening element. The chain tensioner body has a first and second connecting part which are placed at a determined mutual distance and can be connected to respectively a first and second link of the chain. The chain tensioner body can move between a first and second position. **In** the second position the links are moved in opposite directions in order to tension the chain. A lever is connected to the chain tensioner body and moves it from the first to the second position. The lever indicates when the second position has been reached at a predetermined tension. **In** the second position the first fastening element can be connected to a third link in order to secure the chain tensioner.

## Description

### Field of the invention

The present invention relates to an assembly for tensioning chains.

### Background

In the present prior art the tensioning of chains is performed using a chain tensioner. End fittings, such as hooks or so-called elephant feet, are here typically attached to both the cargo and the deck. The chain is then gathered and tensioned with the chain tensioner. This process is essential for safe transportation of goods, for instance by sea, wherein the load must remain firmly in place.

An increasing number of commercial aids are available to facilitate this process. There are for instance extensions that help a worker apply more force to the chain so that the chain can be tensioned more easily. The use of such aids is however not without controversy. The use of extensions is prohibited in many places, mainly because there is a risk of the chain being tensioned with too much biasing force. This can have negative consequences, such as breaking of chains and problems with releasing of the load at the destination harbour. This can result in dangerous situations, such as chains breaking, which endangers the safety of the load and crew. It can furthermore result in practical problems in unloading of the load at the destination harbour, which is time-consuming and inefficient.

### Summary of the invention

Embodiments of the invention have the object of providing a tensioning assembly which enables the user to tension chains safely and efficiently.

According to a first aspect, for this purpose a tensioning assembly for tensioning at least one chain is provided, wherein the at least one chain comprises a plurality of links which are respectively connected to each other, comprising a chain tensioner which comprises a chain tensioner body and a first fastening element connected to the chain tensioner body, wherein a first outer end of the chain tensioner body is provided with a first connecting part and a second connecting part which are situated at a first distance from each other, wherein the first connecting part and the second connecting part are configured to be connected to respectively a first link and a second link of the plurality of links, wherein the chain tensioner body is movable between a first position and a second position, wherein in the first position the first link is connectable to the first connecting part and the second link is connectable to the second connecting part, wherein, during movement of the chain tensioner body from the first position to the second position, the first connecting part and the second connecting part make the first link and the second link move in opposite directions relative to each other in order to tension the at least one chain; and a lever which is connected to the chain tensioner body, wherein the lever is configured to move the chain tensioner body from the first position to the second position and is configured to indicate that the second position has been reached when the lever detects a predetermined tension of the at least one chain, and wherein in the second position the first fastening element is connectable to a third link of the plurality of links in order to secure the chain tensioner in the second position. An advantage of the tensioning assembly is that it gives the user a clear indication of when the correct tension has been reached, this improving the accuracy and safety of the tensioning.

Preferably, the chain tensioner body is elongate and the chain tensioner body extends between the first outer end and a second outer end of the chain tensioner body. An elongate chain tensioner body which extends between a first and a second outer end provides the advantage of improved lever action. This exemplary embodiment enables a greater force to be exerted on the chain with less effort, this making the tensioning more efficient and less heavy for the user. This design can also improve the stability of the chain tensioner during use, this increasing safety and reducing the chances of accidents.

The chain tensioner body preferably forms the first connecting part and the second connecting part. When the chain tensioner body forms both the first and the second connecting part, this provides the advantage of an integrated design which reduces the complexity and the number of individual parts. This can result in a more robust and durable system, since there is less danger of wear or defects in individual connections. Such an integrated design can moreover simplify production and assembly, which can result in lower production costs and a more efficient production process. This also reduces the chances of errors during mounting, which increases the reliability and consistency of the chain tensioner.

The first connecting part and the second connecting part preferably form respectively a first recess and a second recess for receiving respectively the first link and the second link. When the first connecting part and the second connecting part form respectively a first recess and a second recess for receiving the first and second link, this provides the advantage of an accurate and safe positioning of the links in the chain tensioner. These recesses ensure that the links are held firmly in place during tensioning, which increases the stability and safety of the assembly. This reduces the chances of undesired movements or displacements of the links, which can contribute to a uniform distribution of the tension over the chain. The use of recesses can furthermore facilitate installation and removal of the chain, this improving the convenience of use and the efficiency of the chain tensioner.

The first recess and the second recess preferably comprise respectively a first opening and a second opening, wherein the first opening and the second opening face in opposite directions. When the first recess and the second recess comprise respectively a first opening and a second opening, these facing in opposite directions, this provides the specific advantage that the links can be tightened in opposite directions. This enables the chain to be tightened with an efficient and uniform tension in that the forces act in opposite directions. This contributes to a more stable and safer securing of the chain, because the risk of displacing or loosening of the links is reduced. This exemplary embodiment can furthermore improve the effectiveness of the tensioning by making optimal use of the forces, which results in a more reliable and more consistent tensioning process.

A first dimension of the first opening and the second opening preferably corresponds substantially with respectively a second dimension of the first link and the second link. When a first dimension of the first opening and the second opening corresponds substantially with respectively a second dimension of the first link and the second link, this provides the advantage of an accurate and tight fit between the links and the chain tensioner. This accurate match ensures that the links are held firmly in the openings, which increases the stability and safety of the connection. Matching the dimensions to each other reduce the chances of undesired movements or play, this contributing to a more efficient and more reliable tensioning process. This design can also facilitate installation in that the links fit in the openings intuitively and without additional adjustments, which improves the convenience of use and the speed of the tensioning.

The first fastening element is preferably connected to the chain tensioner body at a third distance from the first outer end, preferably at the position of the second outer end. When the first fastening element is connected to the chain tensioner body at a third distance from the first outer end, preferably at the position of the second outer end, this provides the advantage that the fastening element can be coupled to the chain in simple manner. This distance ensures that there is sufficient space to easily fasten the chain to the fastening element and later release it again. This facilitates the use of the chain tensioner in that the process of fastening and releasing requires less effort and time. This increases the convenience of use and improves the efficiency of the tensioning and releasing process.

The lever is preferably releasably connectable to the chain tensioner body. When the lever is releasably connectable to the chain tensioner body, this provides the advantage of flexibility and convenience of use. This enables the lever to be fastened and to be removed in simple manner, which is convenient for storage and transport of the chain tensioner. The releasable design can also contribute to the versatility of the tensioning assembly in that the lever can be replaced or adjusted to specific user requirements without the whole chain tensioner body having to be replaced. When the lever is releasably connectable to the chain tensioner body, this provides not only flexibility and convenience of use, but also the option of using the lever in other chain tensioners. This increases the versatility of the lever in that it is compatible with different systems, which can be cost-saving in that fewer specific parts are needed for different applications. It also makes it simpler to share the lever among different chain tensioners, which can be convenient in situations where a plurality of systems are in use. This interoperability can improve the efficiency of the operating process and reduce the need to purchase a plurality of levers, which is advantageous from both a practical and economic viewpoint.

The lever preferably comprises a lever body, a lever head, a coupling piece and at least one elastic element, wherein the lever body extends between a first lever body end and a second lever body end; wherein on one side the lever head is connected pivotally to the first lever body end and is connectable rigidly to the second outer end, and wherein on the other side the lever head is connected to the coupling piece; wherein the at least one elastic element is configured to exert a predetermined pressure on the coupling piece so that when a torque, which torque is exerted by the lever head on the second outer end or vice versa during the movement from the first position to the second position, exceeds the predetermined pressure, the connection between the coupling piece and the lever head is broken at least partially. The lever body which extends between a first and a second lever body end provides for a strong structure which can transmit the forces during tensioning in effective manner. The pivotable connection of the lever head to the first lever body end and the rigid connection to the second outer end provide a combination of flexibility and stability, whereby the lever head can move precisely and can transmit the forces efficiently. The connection of the lever head to the coupling piece, together with the elastic element which exerts a predetermined pressure, introduces a safety mechanism. This mechanism ensures that when the exerted torque exceeds the predetermined pressure, the connection between the coupling piece and the lever head is broken at least partially. This provides the advantage of protection against overload in that the system can automatically react to excessively high forces, which prevents damage to the chain tensioner and the chain. This configuration enables the tension to be accurately controlled and provides an additional layer of safety for safe and efficient tensioning of chains.

The coupling piece preferably comprises an intermediate part and a tilting part, wherein the tilting part is arranged tiltably between the lever head and the intermediate part, wherein the intermediate part is configured to transmit the predetermined pressure to the tilting part and the lever head, wherein the tilting part is configured to tilt when the predetermined pressure is exceeded in order to break the connection between the coupling piece and the lever head at least partially. When the coupling piece comprises an intermediate part and a tilting part, this provides a refined mechanism which improves the safety and functionality of the chain tensioner further. The tilting part, which is arranged tiltably between the lever head and the intermediate part, provides for a dynamic connection which can react to changes in pressure. The intermediate part is configured to transmit the predetermined pressure to both the tilting part and the lever head, making a controlled transmission of forces possible. The tilting part is designed such that it tilts when the predetermined pressure is exceeded, which results in the connection between the coupling piece and the lever head being partially broken. This provides the advantage of a built-in safety mechanism which protects against overload. By tilting when the pressure is exceeded, the tilting part prevents excessive forces from causing damage to the chain tensioner or the chain itself. This configuration provides for an automatic uncoupling in the case of excessive tension, which increases the reliability and lifespan of the system. It provides an effective manner of controlling the tension and absorbing undesired changes in force, this being essential for safe and efficient use of the chain tensioner.

The predetermined pressure preferably corresponds with a predetermined desired tension on the chain. When the predetermined pressure corresponds with a predetermined desired tension on the chain, this provides the advantage of an accurate and consistent tension control. This correspondence ensures that the chain is always brought to the correct tension, which is essential for the safety and stability of the load. Adapting the pressure precisely to the desired tension of the chain considerably reduces the risk of excess tension and the damage or safety problems caused thereby for the chain.

The lever head is preferably elongate.

The at least one elastic element is preferably a spring.

Preferably, the first lever body end comprises a cavity and the lever head is accommodated partially in the cavity.

The lever head preferably further comprises a recess, wherein the recess is configured to receive the tilting part and to enable tilting of the tilting part.

The intermediate part preferably comprises a further recess, wherein the further recess is configured to receive the tilting part and to enable tilting of the tilting part.

The lever preferably further comprises a handle on the second lever body end, wherein the handle is configured to move the chain tensioner body from the first position to the second position.

The lever preferably further comprises a pressure adjusting mechanism, wherein the pressure adjusting mechanism is configured so that the predetermined pressure is adjustable. When the lever further comprises a pressure adjusting mechanism, this provides the advantage of flexibility and control over the tension exerted on the chain. The pressure adjusting mechanism enables the predetermined pressure to be adjusted so that the tension on the chain can be optimized for different conditions and loads. This adjustability ensures that the chain tensioner can be widely applied and can be adapted to specific requirements, which increases the utility and efficiency of the system. Adjusting the pressure in simple manner enables users to react quickly to changing situations and to ensure that the chain is always tensioned to the correct tension. This reduces the risk of damage due to excess tension and increases the safety and reliability of the tensioning process.

The chain tensioner preferably further comprises a first connecting part, wherein the first connecting part connects the first fastening element to the chain tensioner body.

The first connecting part is preferably substantially elastically non-deformable.

The first connecting part is preferably a first fastening chain.

The chain tensioner preferably comprises a second fastening element which is connected to the chain tensioner body between the first outer end and the first fastening element.

The chain tensioner preferably further comprises a second connecting part.

The second connecting part preferably connect the second fastening element to the chain tensioner body.

The second connecting part is preferably substantially elastically non-deformable.

The second connecting part is preferably a second fastening chain.

The tensioning assembly preferably further comprises an extension which is arranged between the chain tensioner body and the lever.

The extension is preferably releasably connectable to the chain tensioner body.

The extension is preferably releasably connectable to the lever.

The extension preferably comprises an extension body, a first coupling element and a second coupling element.

Preferably, the extension body is elongate and the extension body extends between a first extension end and a second extension end.

The extension body preferably forms the first coupling element and the second coupling element.

The first coupling element and the second coupling element are preferably situated at a second distance from each other.

In connected state the extension body preferably overlaps partially with the chain tensioner body.

The second distance between the first coupling element and the second coupling element preferably amounts to 200 mm to 250 mm, preferably 215 mm to 230 mm.

The distance between the first extension end and the second extension end preferably amounts to 600 mm to 1200 mm, preferably 850 mm to 950 mm.

The chain tensioner body preferably has a length of 500 mm to 650 mm, preferably of 575 mm to 595 mm.

According to a further aspect, a chain tensioner for tensioning at least one chain is provided. The chain tensioner comprises: a movable chain tensioner body, wherein the chain tensioner body comprises a first outer end and a second outer end, wherein the first outer end is provided with a first connecting part and a second connecting part which are situated at a mutual distance, wherein the chain tensioner body is movable between a first position and a second position; a first fastening element connected to the chain tensioner body; and a lever connected to the body.

According to a further aspect, a method for tensioning at least one chain is provided, the method comprising of:
- providing a tensioning assembly according to any one of the foregoing claims,
- connecting a first link of the plurality of links to the first connecting part,
- connecting a second link of the plurality of links to the second connecting part,
- moving the chain tensioner body from a first position to a second position with the lever, wherein the first connecting part and the second connecting part make the first link and the second link move in opposite directions relative to each other in order to tension the at least one chain,
- detecting a predetermined tension on the at least one chain using the lever,
- indicating, using the lever, when the second position has been reached when the lever detects a predetermined tension of the at least one chain,
- connecting the first fastening element to the third link in order to secure the chain tensioner in the second position.

### Brief description of the figures

The above stated and other advantageous features and objects of the invention will become more apparent, and the invention better understood, on the basis of the following detailed description when read in combination with the accompanying drawings, in which:
Figure 1 shows a side view of an exemplary embodiment of a tensioning assembly;
Figure 2 shows a side view of a further exemplary embodiment of a tensioning assembly;
Figure 3 shows a side view of a further exemplary embodiment of a tensioning assembly;
Figure 4A shows a section of an exemplary embodiment of a lever in a first state;
Figure 4B shows a section of an exemplary embodiment of a lever in a second state;
Figure 5A shows an exemplary embodiment of a chain to be tensioned;
Figure 5B shows the tensioning assembly shown in figure 1 in a first position;
Figure 5C shows the tensioning assembly shown in figure 1 in a second position;
Figure 5D shows a tensioning assembly which is secured in the second position;
Figure 6 shows a side view of an exemplary embodiment of a chain tensioner.

### Detailed embodiments

The following detailed description relates to determined specific embodiments. The teaching hereof can however be applied in different ways.

The present invention will be described with reference to specific embodiments. The invention is however not limited thereto, but solely by the claims.

As used here, the singular forms "a" and "the" comprise both the singular and plural references, unless clearly indicated otherwise by the context.

The terms "comprising", "comprises" and "composed of" as used here are synonymous with "including". The terms "comprising", "comprises" and "composed of" when referring to stated components, elements or method steps also comprise embodiments which "consist of" the components, elements or method steps.

The terms first, second, third and so on are further used in the description and in the claims to distinguish between similar elements and not necessarily to describe a sequential or chronological order, unless this is specified. It will be apparent that the thus used terms are mutually interchangeable under appropriate conditions and that the embodiments of the invention described here can operate in an order other than described or illustrated here.

Reference in this specification to "one embodiment", "an embodiment", "some aspects", "an aspect" or "one aspect" means that a determined feature, structure or characteristic described with reference to the embodiment or aspect is included in at least one embodiment of the present invention. The manifestations of the sentences "in one embodiment", "in an embodiment", "some aspects", "an aspect" or "one aspect" in different places in this specification thus do not necessarily all refer to the same embodiment or aspects. As will be apparent to a skilled person in this field, the specific features, structures or characteristics can further be combined in any suitable manner in one or more embodiments or aspects. Although some embodiments or aspects described here comprise some but no other features which are included in other embodiments or aspects, combinations of features of different embodiments or aspects are further intended to fall within the context of the invention and to form different embodiments or aspects, as would be apparent to the skilled person. In the appended claims all features of the claimed embodiments or aspects can for instance be used in any combination.

The same or similar elements are designated in the figures with the same reference numerals.

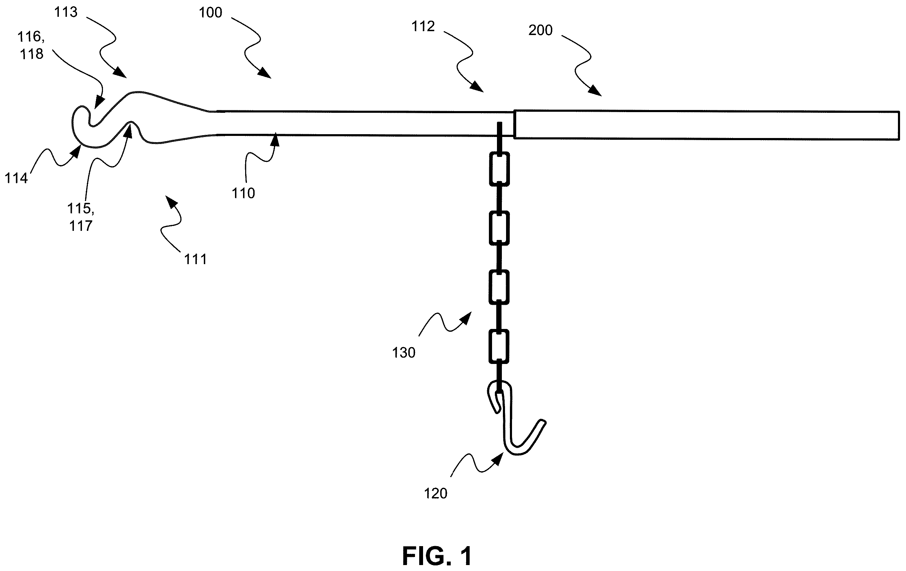

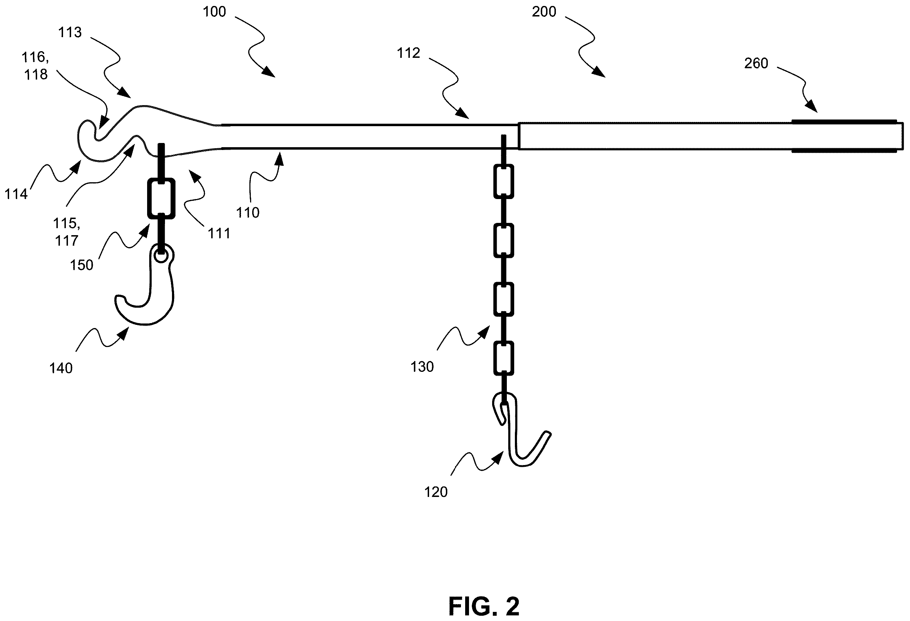

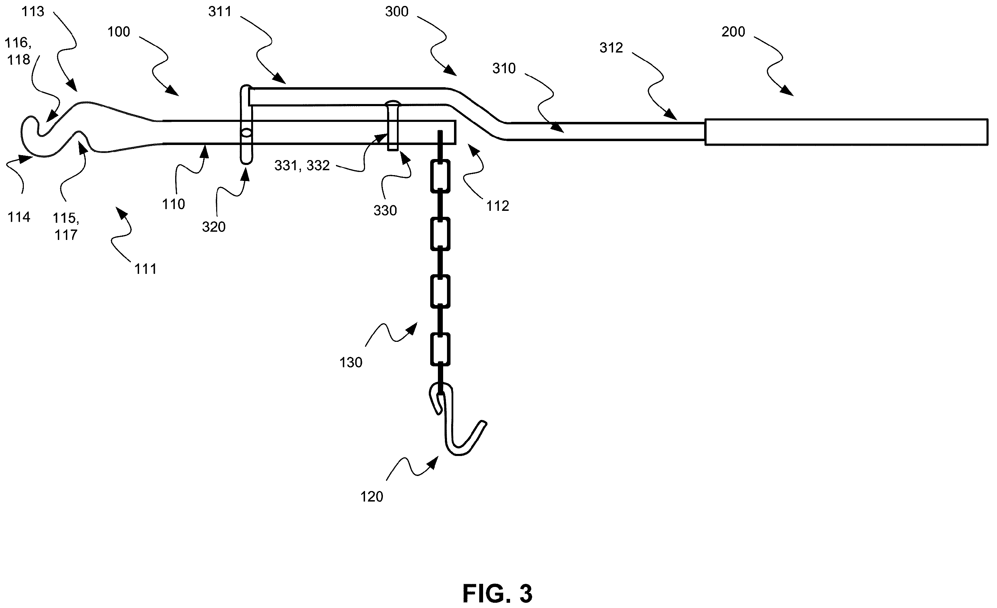

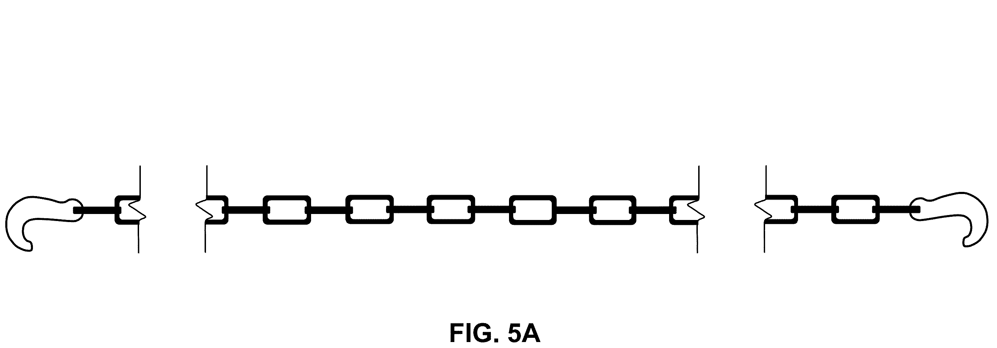

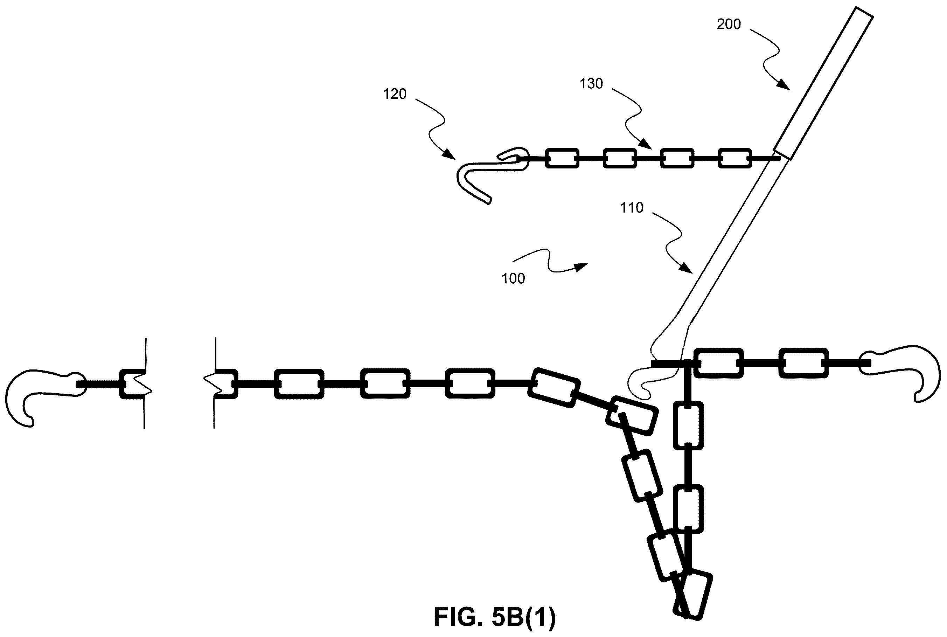

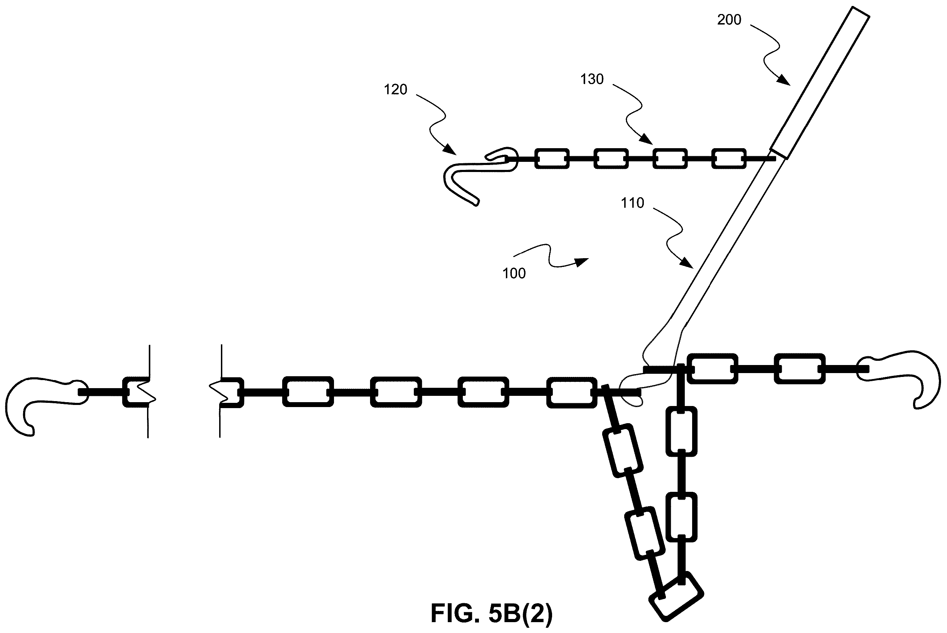

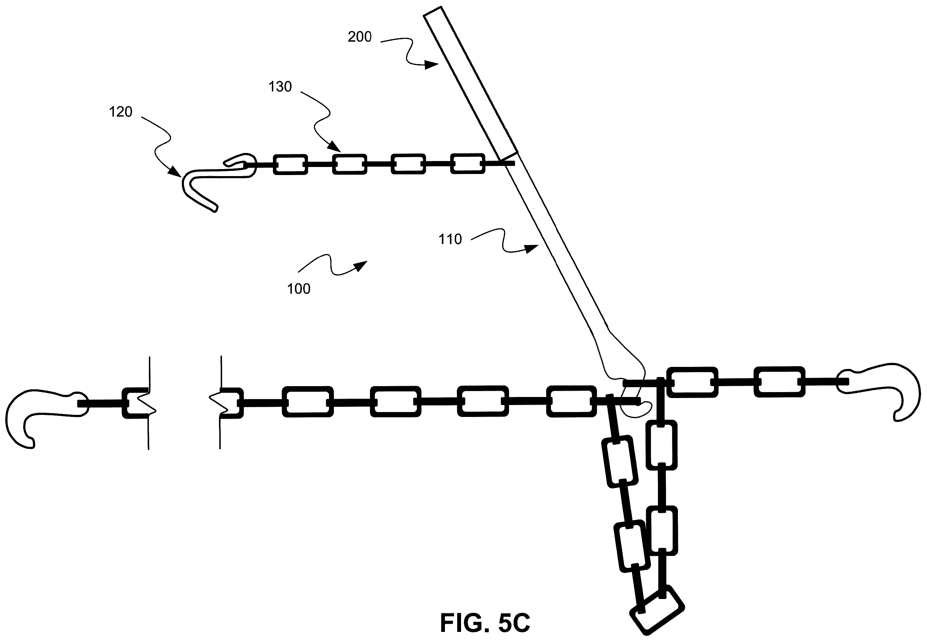

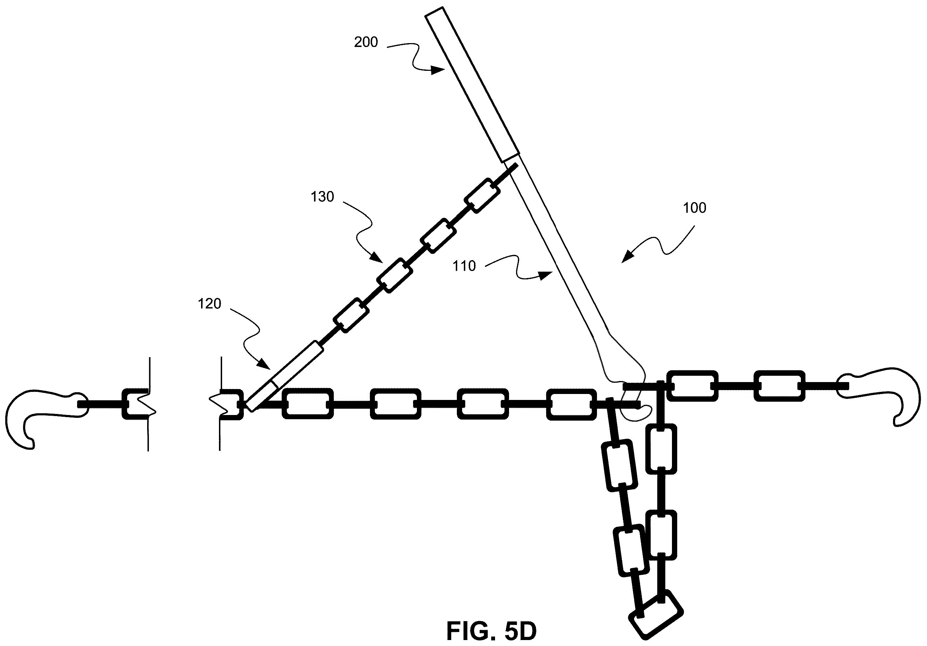

Figure 1 shows an exemplary embodiment of a tensioning assembly. Figure 1 shows a side view of the tensioning assembly. A tensioning assembly can be understood to mean an assembly which is used for tensioning at least one chain. Chains are typically used to secure diverse objects, for instance in securing of a load for transport on a ship or a truck. The tensioning assembly as shown in figure 1 is configured to tension at least one chain, an example of a chain being shown in figures 5A, 5B, 5C and 5D. Figures 2 and 3 show further exemplary embodiments of the tensioning assembly in figure 1. Although the figures 5A, 5B, 5C and 5D show specific examples of chains which can be tensioned with the tensioning assembly, use thereof is not limited to these configurations. The tensioning assembly can also be applied effectively to other types of chain, such as those used in conveyor belts, motorbikes and industrial machines. The tensioning assembly can furthermore be adapted for use with alternative tensioning means, such as belts, cables or ropes. The at least one chain shown in 5A, 5B, 5C and 5D comprises a plurality of links, wherein the links are respectively connected to each other as shown in figures 5A, 5B, 5C and 5D.

The tensioning assembly comprises a chain tensioner 100 and a lever 200. As shown in figure 1, the chain tensioner 100 and the lever 200 lie mutually in line. The chain tensioner 100 and the lever 200 are connected to each other. As shown in figure 1, the chain tensioner 100 and the lever 200 can be connected to each other at a respective outer end. The chain tensioner 100 and the lever 200 can thus each have a first and a second outer end, and the first outer end of chain tensioner 100 can be connected to the first or the second outer end of lever 200, or vice versa. The chain tensioner 100 and the lever 200 are preferably connected releasably to each other. Various techniques can be applied to connect chain tensioner 100 and lever 200 releasably to each other, each having their own advantages. A first technique is application of a screw connection, wherein screws or bolts are inserted through corresponding holes in the chain tensioner and the lever. This provides for a firm connection which can be released in simple manner when necessary. Another technique is the use of a quick-release mechanism, such as a clamp or handle, whereby the parts can be connected or released rapidly and without tools. This is particularly useful in situations where frequent maintenance or adjustment is required. In addition, a system with pins and holes can be used, wherein aligning pins fit into corresponding holes in order to hold the parts in place. These pins can be removed in simple manner in order to release the connection. For applications requiring a rapid and simple connection use can be made of a snap system. The components here snap into each other and are firmly secured, but can be released again with a determined force.

The chain tensioner 100 is configured to tension the at least one chain, this further also being elucidated and shown in figures 5B, 5C, 5D. The chain tensioner 100 comprises a chain tensioner body 110 and a first fastening element 120.

A chain tensioner body 110 can be understood to mean the part of the chain tensioner 100 forming the base structure. An advantage hereof is that chain tensioner body 110 forms a strong and stable base for absorbing and distributing the forces occurring during tensioning of the at least one chain. The chain tensioner body 110 is preferably elongate. Elongate can be understood to mean a form that is longer in one direction than in the other. An elongate chain tensioner body 110 can for instance take the form of a rod. This rod form enables the forces needed to tension the chain to be distributed uniformly over the length of the body, which contributes to the stability and effectiveness of the chain tensioner. An elongate design can furthermore improve the accessibility and the convenience of use, especially in situations where space is limited or where a longer reach is required in order to tension the chain correctly.

The chain tensioner body 110 is provided with a first outer end 111 and a second outer end 112. The chain tensioner body 110 extends between the first outer end 111 and the second outer end 112. The first outer end 111 the second outer end 112 lie at a mutual distance. An outer end can be understood to mean the end point of an object, in this case the body. The distance between the first outer end 111 and the second outer end 112 is measured along the longitudinal axis of the tensioning assembly. The distance is substantially determined by the length of the chain tensioner body 110, the distance can for instance be 1 metre.

The first outer end 111 comprises a first connecting part 113 and a second connecting part 114. A connecting part 113, 114 can be understood to mean a part designed to enter into connection with another element, such as a link of the plurality of links of the at least one chain. The first connecting part 113 and the second connecting part 114 are configured to be connected to respectively a first link and a second link of the plurality of links of the at least one chain as shown in figures 5B, 5C and 5D. The first connecting part 113 the second connecting part 114 lie at a first mutual distance. The first distance is preferably measured along a longitudinal axis of the chain tensioner body 110. The first connecting part 113 and the second connecting part 114 are preferably formed by the chain tensioner body 110. This means that, rather than being separate components which are attached to the chain tensioner body, the first connecting part 113 and the second connecting part 114 are manufactured or formed directly from the material of the chain tensioner body and thus form an integral whole. In other words, the first connecting part 113 and the second connecting part 114 and the chain tensioner body are formed integrally.

The first connecting part 113 and the second connecting part 114 comprise respectively a first recess 115 and a second recess 116. The first recess 115 and the second recess 116 are configured to receive respectively the first link and the second link, as shown in figures 5B, 5C and 5D. A recess can be understood to mean a notch or groove that is designed to accommodate a specific part. An example thereof is that the recesses take the form of a notch or groove which matches the shape and size of the links of the chain. When the chain is placed in the recesses, the links are held firmly, whereby they are unable to shift or come loose during tensioning. An advantage of the first recess 115 and the second recess 116 is that the first recess 115 and the second recess 116 provide an accurate and safe positioning of respectively the first link and the second link, and ensure that the first link and the second link are held firmly in place during tensioning of the at least one chain.

The first recess 115 and the second recess 116 comprise respectively a first opening 117 and a second opening 118. The first opening 117 and the second opening 118 face in opposite directions. In figure 1 the first opening 117 is directed downward and the second opening 118 is directed upward, as seen in a plane perpendicularly of the longitudinal axis of the tensioning assembly. A first dimension of the first opening 117 and the second opening 118 corresponds substantially with a second dimension of respectively a first link and a second link of the plurality of links of the at least one chain. The first dimension of the first opening 117 and the second opening 118 refers to the width of the first opening 117 and the second opening 118. The width of an opening must be interpreted as being the horizontal distance between the two points on the inner side of the opening lying furthest apart, as measured perpendicularly of the longitudinal axis of the opening. In this description the first dimension of the first opening 117 and the second opening 118 refers to the width of respectively the first opening 117 and the second opening 118. This means that when reference is made to the first dimension of these openings, this is understood to mean specifically the width of these openings. For instance, if the first opening 117 has a width of 5 millimetres and the second opening 118 a width of 10 millimetres, the first dimension of the first opening 117 is 5 millimetres and the first dimension of the second opening 118 is 10 millimetres. The second dimension of the first link and the second link refers to the thickness of the first link and the second link. The width of the first opening and the second opening substantially corresponding with the thickness of the first link and the second link is shown in figures 5A, 5B and 5C.

The first fastening element 120 is configured to connect to a third link of the plurality of links of the at least one chain as shown in figure 5D. A fastening element can be understood to mean a part designed to fasten to another element, such as a link of the plurality of links of the at least one chain. The first fastening element 120 is connected to the chain tensioner body 110 with a first connecting part 130. A connecting part can be understood to mean a part designed to connect a first component to a second component. The first fastening element 120 is preferably connected to the chain tensioner body 110 at a distance from the first outer end 111, preferably at the position of the second outer end 112. The first connecting part 130 is preferably substantially elastically non-deformable. This is understood to mean that the first connecting part 130 is a rigid component. The first connecting part 130 is preferably a first fastening chain, as shown in figure 1, but is not limited thereto.

The lever 200 is configured to detect when a predetermined tension on the at least one chain has been reached. In other words, the lever 200 is configured to detect when a predetermined tension on at least one chain has been reached. This means that the lever comprises a mechanism or sensor which reacts to the tension in the chain and generates a signal or performs an action as soon as the tension reaches a pre-set level. In the context of tensioning a chain, the lever 200 can for instance be used to ensure that the chain is tensioned correctly and safely. When the chain reaches during tensioning a tension corresponding with the optimal tension for safe and efficient operation, the lever detects this tension. At that moment the lever can for instance also activate a visual or audio signal to warn the user that the desired tension has been reached, or automatically stop the tensioning mechanism in order to prevent the chain from being tensioned too tightly. This function helps to extend the lifespan of the chain and to guarantee the safety of application.

The lever 200 can further be configured to indicate when a predetermined tension on the at least one chain has been reached. This means that the lever is not only able to detect the tension, but also to give an indication as soon as the chain reaches the preset tension. In the tensioning assembly for tensioning chain the lever 200 can for instance be equipped with an indicator, such as a light or an audio signal, which is activated when the chain reaches the optimal tension. This provides the user with direct feedback that the chain has been tensioned correctly, this reducing the risk of excess tension and possible damage to the chain or the system. This additional functionality contributes to the user-friendliness and safety of the system.

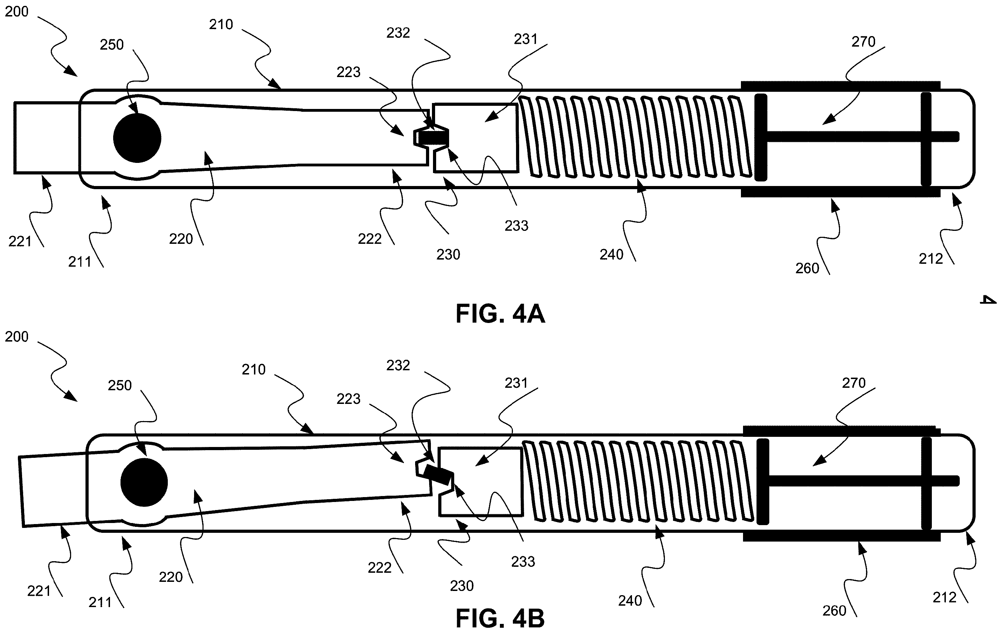

An advantage thereof is that the user is given a clear indication when a predetermined tension has been reached, this improving the accuracy and safety of the tensioning. A section of an exemplary embodiment of the lever 200 is provided in figure 4.

Figure 2 shows a further exemplary embodiment of a tensioning assembly for tensioning at least one chain. Figure 2 shows a side view of the tensioning assembly.

The tensioning assembly in figure 2 differs from the tensioning assembly in figure 1 in that the chain tensioner 100 comprises a second fastening element 140 in figure 2.

The second fastening element 140 is configured to connect to a fourth link of the plurality of links of the at least one chain. The second fastening element 140 is configured to apply an initial tension to the at least one chain. For this purpose the second connecting part 114 must firstly be connected to a first link. The fastening element 140 is then connected to a fourth link. The fourth link lies at a distance from the first link. An initial tension can be applied by moving the tensioning assembly in a direction of the first link or positioning or adjusting the fastening element 140 such that the chain is tightened to a predetermined level. Hereby, the links between the first link and the fourth link become tension-free or, in other words, become slack. The first connecting part 113 can then engage a link lying between the fourth link and the first link. When the tensioning assembly is then moved in the direction away from the first link, the chain can be tensioned further in order to achieve the desired final tension.

The fourth link is situated between the first link and the second link. The second fastening element 140 is connected to the chain tensioner body 110 between the first outer end 111 and the first fastening element 120. The second fastening element 140 is connected to the chain tensioner body 110 with a second connecting part 150. The second connecting part 150 is preferably substantially elastically non-deformable. The second connecting part 150 is preferably a second fastening chain as shown in figure 2.

The lever 200 as shown in figure 2 and figure 4 can further comprise a handle 260, but is not limited thereto. The handle 260 can be used to move the chain tensioner body 110 from a first position to a second position. The handle 260 is preferably located at the second lever body outer end 212 as shown in figure 4.

Figure 3 shows a further exemplary embodiment of the tensioning assembly for tensioning at least one chain. Figure 3 shows a side view of the tensioning assembly.

The tensioning assembly in figure 3 differs from the tensioning assembly in figure 1 in that the tensioning assembly in figure 3 comprises an extension 300. An extension 300 can be understood to mean a component used to increase the length or the reach of an existing object or system. An advantage of the extension 300 is that extension 300 reduces the strain for the user. The extension 300 is arranged between the chain tensioner body 110 and the lever 200. Extension 300 can preferably be connected releasably to lever 200. Extension 300 can preferably be connected releasably to the chain tensioner body 110. When extension 300 is connected to the chain tensioner body 110, extension 300 overlaps partially with the chain tensioner body 110. The extension comprises an extension body 310 and at least a first coupling element 320 and a second coupling element 330.An extension body can be understood to mean the part of the extension 300 forming the base structure. An advantage thereof is that the extension body 310 forms a strong and stable base for absorbing and distributing the forces occurring during tensioning of the at least one chain. The extension body 310 is preferably elongate. The extension body 310 preferably extends between a first extension end 311 and a second extension end 312. The distance between the first extension end 311 and the second extension end 312 preferably amounts to 600 mm to 1200 mm, preferably 850 mm to 950 mm.

The first coupling element 320 is configured to enable connection of the extension 300 to the chain tensioner body 110. A coupling element 320 can be understood to mean a part designed to enter into connection with another element, such as the chain tensioner body 110. The first coupling element 320 is preferably formed by the extension body 310. The first coupling element 320 is preferably connected to the first extension end 311. The first extension 320 is preferably formed by the first extension end 311. The first coupling element 320 can preferably hook around the chain tensioner body 110.

The second coupling element 330 is configured to enable connection of the extension 300 to the chain tensioner body 110. The second coupling element 330 is situated at a distance from the first coupling element 320. The distance between the first coupling element 320 and the second coupling element 330 is measured along the longitudinal axis of the extension body 310. The second coupling element 330 is preferably formed by the extension body 310. The second coupling element preferably comprises a first protrusion 331 and a second protrusion 332. The first protrusion 331 and the second protrusion 332 are configured so that they are each situated on a side of the chain tensioner body 110 when extension 300 is connected to chain tensioner 100. A protrusion can be understood to mean a part that protrudes outward from the extension body 320. An advantage thereof is that the first protrusion 331 and the second protrusion 332 ensure that extension 300 remains in line with the chain tensioner body 110 during tensioning of the at least one chain.

The distance between the first coupling element 320 and the second coupling element 330 preferably amounts to 200 mm to 250 mm, preferably 215 mm to 230 mm.

Figures 4A and 4B show an exemplary embodiment of the lever 200. Figure 4 shows a section of lever 200. Figure 4A shows the exemplary embodiment of the lever in a first state. Figure 4B shows the exemplary embodiment of the lever in a second state. The first state is the state lever 200 is in before a predetermined tension has been reached. The second state is the state lever 200 is in when a predetermined tension has been reached.

The lever 200 comprises a lever body 210, a lever head 220, a coupling piece 230 and at least one elastic element 240.

The lever body comprises a first lever body end 211 and a second lever body end 212. The lever body extends between the first lever body end 211 and a second lever body end 212. The lever body 210 comprises a cavity at the first lever body end 211. A cavity is understood to mean an empty or open space inside an object or structure, such as the lever body 210. The cavity preferably extends along the longitudinal axis of the lever body 210. When the cavity extends overlapping the longitudinal axis of lever body 210, a centred structure is formed inside the lever body. This exemplary embodiment ensures that the cavity is distributed uniformly along the length of the lever, which can contribute to a balanced weight distribution and structural integrity. This configuration can moreover have functional advantages, such as facilitating throughfeed of components or optimizing the distribution of forces inside the lever. The lever body 210 is preferably elongate, as shown in figure 4.

The lever head 220 comprises a first lever head end 221 and a second lever head end 222. The lever head 220 extends between the first lever head end 221 and the second lever head end 222. The lever head 220 can be provided in different forms in order to enable different types of connection. As shown in figure 4, the lever head 220 is preferably elongate. Lever head 220 is accommodated partially in the cavity of lever body 210, which means that a part of the lever head is placed inside this cavity. Lever head 220 can be connected pivotally to the first lever body end 211. This means that lever head 220 is able to turn or to pivot around or relative to the first lever body end 211. Lever head 220 can be connected pivotally to the first lever body end, for instance by means of a rotation pin 250 as shown in figure 4 or an alternative connecting means. The first lever head end 221 is connectable rigidly to the chain tensioner body 110 as shown in figures 1 and 2. This rigid connection ensures that the force and the torque exerted via the lever 200 are transmitted directly and efficiently to the chain tensioner 100. The advantage hereof is that the force which is exerted via the lever 200 is transmitted directly to the chain tensioner 100. This results in a direct link between the force exerted on chain tensioner 100 and the force experienced by the lever head 220 connected to the chain tensioner body 110. The first lever head end 221 is preferably connected to the second out end 112 of the chain tensioner body 110. The first lever head end 221 can preferably be connected releasably to the second outer end 112. The first lever head end 221 is connectable rigidly to the extension 300 as shown in figure 3. The first lever head end 221 can preferably be connected releasably to the extension 300. The second lever head end 222 is connectable to the coupling piece 230. The second lever head end 222 comprises a recess 223.

A coupling piece 230 is understood to mean a part enabling the transmission of movement, force or signals between two systems or components. The coupling piece 230 is arranged between the lever head 220 and the at least one elastic element 240. The coupling piece 230 is accommodated in the cavity of the lever body 210. The coupling piece comprises an intermediate part 231 and a tilting part 232. An intermediate part 231 is understood to mean a component which is used to connect two other parts, often in order to enable a specific configuration or function. A tilting part 232 is understood to mean a part that can tilt in order to adjust the position or angle of another part, often in order to facilitate a specific function or movement. The tilting part 232 is arranged between the second lever head end 222 and the intermediate part 231.

The intermediate part 231 is configured to transmit a predetermined pressure exerted by the at least one elastic element 240 to the tilting part 232 and the lever head 220. The intermediate part 231 transmits the predetermined pressure to the tilting part 232 and the lever head 220 by moving in the direction of tilting part 232 and lever head 220. The moving comprises a movement parallel to the longitudinal axis of lever 200. Because lever head 220 is connected to lever body 210, the movement of intermediate part 231 ensures that lever head 220, tilting part 232 and intermediate part 231 are pressed against each other. The pressure with which lever head 220, tilting part 232 and intermediate part 231 are pressed against each other corresponds with the predetermined pressure exerted by the at least one elastic element 240.

The intermediate part comprises a further recess 233. The further recess 233 is situated on a side of the intermediate part 231 lying adjacently of the tilting part 232. The recess 223 and the further recess 233 are configured to receive the tilting part 232. Recess 223 and further recess 233 are configured to enable tilting of tilting part 232 as shown in figure 4B.

Tilting part 232 is configured to tilt when the pressure applied by intermediate part 231 is exceeded as shown in figure 4B. The pressure applied by intermediate part 231 corresponds with the predetermined pressure exerted by the at least one elastic element 240. The tilting part 232 is preferably rectangular, although the tilting part 232 is not limited thereto.

The at least one elastic element 240 is configured to exert a predetermined pressure on coupling piece 230 and lever head 220. The predetermined pressure preferably corresponds with a desired predetermined tension on the chain. This provides the advantage of an accurate and consistent tension control, this considerably reducing excess tension and the damage or safety problems caused thereby for the chain. The at least one elastic element 240 is preferably a spring as shown in figures 4A and 4B.

Lever 300 preferably further comprises a pressure adjusting mechanism 270. A pressure adjusting mechanism is understood to mean a mechanism that enables adjustment of a pressure setting in a device, such as adjusting the pressure exerted by the at least one elastic element. The pressure adjusting mechanism 270 is configured to adjust the predetermined pressure exerted by the at least one elastic element 240. An advantage of the pressure adjusting mechanism 270 is that the pressure adjusting mechanism 270 provides flexibility and control over the tension exerted on the chain.

Figure 5 shows the tensioning of the at least one chain with the tensioning assembly according to the exemplary embodiment in figure 1.

Figure 5A shows the at least one chain which is tensioned with the tensioning assembly. The at least one chain comprises a plurality of links which are respectively connected to each other. The at least one chain is provided at a respective outer end with a hooking element. This hooking element be attached to a surface onto which or to which the object is attached. Because the at least one chain is attached at a respective outer end, tension can be applied to the at least one chain, whereby the at least one chain can be tensioned efficiently. The thickness of the plurality of links of the chain preferably lies between 5 mm and 17 mm, preferably between 9 mm and 13 mm.

Figure 5B shows the chain tensioner body 110 in a first position. Figure 5B shows that, in the first position, a first link and a second link of the at least one chain can be connected to respectively the first connecting part 113 and the second connecting part 114. Figure 5B further shows that when the chain tensioner body 110 is in the first position, the first recess 115 and the second recess 116 are respectively configured to receive the first link and the second link.

Figure 5C shows the chain tensioner body 110 in a second position. Moving the chain tensioner body 110 from the first position shown in Figure 5B to the second position shown in figure 5C makes the first link and the second link move in opposite directions. Moving the first link and the second link in opposite directions shows that the initial distance between the first link and the second link decreases, which will be apparent on the basis of figures 5B and 5C. Because the respective outer end of the at least one chain is attached with a hooking element as shown in figure 5A, shortening the distance between the first link and the second link ensures that the at least one chain is tensioned.

Figure 5D shows the tensioning assembly which is secured in the second position with the first fastening element 120. The chain tensioner body 110 can be secured in the second position by fastening the first fastening element 120 to the third link. The third link is situated outside the first link and the second link, as shown in figure 5D.

The chain tensioner body 110 is movable from the first position shown in Figure 5B to the second position shown in figure 5C. The chain tensioner body 110 can be moved from the first position to the second position by applying a force to the lever 200. The force applied to lever 200 creates a torque of the chain tensioner body 110. Because the chain tensioner body 110 is connected rigidly to the first lever head end 221, the torque is transmitted to the lever head 220. When the torque of the lever head exceeds the pressure applied by the at least one elastic element 240, the tilting part 232 tilts as shown in figure 4B. Because the tilting part 232 tilts, the pressure on lever head 220 falls away briefly. The pressure falling away briefly can be detected by the user of the tensioning assembly. Because the tilting part 232 tilts, the second lever head end 222 makes contact with a wall of lever body 210. When contact is made between the second lever head end 222 and the wall of lever body 210, a sound is emitted. This sound can be detected by the user of the tensioning assembly. Because the pressure exerted by the one elastic element corresponds with a desired predetermined tension on the chain, the tilting of tilting element 232 indicates when the predetermined tension on the chain has been reached.

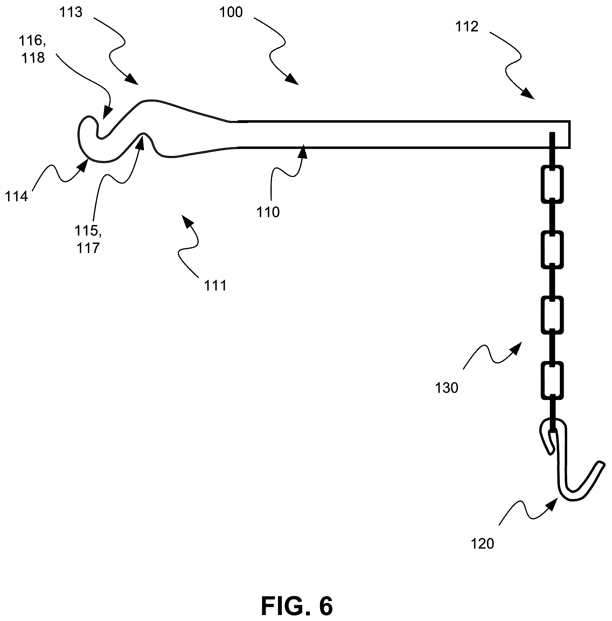

Figure 6 shows an exemplary embodiment of a chain tensioner. Figure 6 shows a side view of an exemplary embodiment of the chain tensioner. The chain tensioner is configured to tension at least one chain. The at least one chain is shown in figures 5A, 5B, 5C and 5D. The tensioning assembly is however not limited to the tensioning of the chain shown in figures 5A, 5B, 5C and 5D. The at least one chain shown in 5A, 5B, 5C and 5D comprises a plurality of links, wherein the links are respectively connected to each other as shown in figures 5A, 5, 5C and 5D.

The chain tensioner 100 comprises a chain tensioner body 110 and a first fastening element 120.

A chain tensioner body 110 can be understood to mean the part of the chain tensioner 100 forming the base structure. An advantage hereof is that chain tensioner body 110 forms a strong and stable base for absorbing and distributing the forces occurring during tensioning of the at least one chain. Provision can be made for the chain tensioner body 110 to be elongate. Elongate can be understood to mean a form that is longer in one direction than in the other. The chain tensioner body 110 is provided with a first outer end 111 and a second outer end 112. The first outer end 111 the second outer end 112 lie at a mutual distance. An outer end can be understood to mean the end point of an object, in this case the body. The distance between the first outer end 111 and the second outer end 112 is measured along the longitudinal axis of the tensioning assembly. The chain tensioner body 110 extends between the first outer end 111 and the second outer end 112. The chain tensioner body 110 preferably has a length of 500 mm to 650 mm, preferably of 575 mm to 595 mm. The length of the chain tensioner body is defined here as the distance between the first outer end 111 and the second outer end 112.

The first outer end comprises a first connecting part 113 and a second connecting part 114. A connecting part can be understood to mean a part designed to enter into connection with another element, such as a link of the plurality of links of the at least one chain. The first connecting part 113 and the second connecting part 114 are configured to connect to respectively a first link and a second link of the plurality of links of the at least one chain as shown in 5B, 5C and 5D. The first connecting part 113 the second connecting part 114 lie at a first mutual distance. The first distance is preferably measured along a longitudinal axis of the chain tensioner body 110. The first connecting part 113 and the second connecting part 114 are preferably formed by the chain tensioner body 110.

The first connecting part 113 and the second connecting part 114 comprise respectively a first recess 115 and a second recess 116. The first recess 115 and the second recess 116 are configured to receive respectively the first link and the second link, as shown in 5B, 5C and 5D. A recess can be understood to mean a notch or groove that is designed to accommodate a specific part. An advantage of the first recess 115 and the second recess 116 is that the first recess *115* and the second recess 116 provide an accurate and safe positioning of respectively the first link and the second link, and ensure that the first link and the second link are held firmly in place during tensioning of the at least one chain.

The first recess 115 and the second recess 116 comprise respectively a first opening 117 and a second opening 118. An opening can be understood to mean a passage or hole in a structure. The first opening 117 and the second opening 118 face in opposite directions. A first dimension of the first opening 117 and the second opening 118 corresponds substantially with a second dimension of respectively a first link and a second link of the plurality of links of the at least one chain. The first dimension of the first opening 117 and the second opening 118 refers to the width of the first opening 117 and the second opening 118. The second dimension of the first link and the second link refers to the thickness of the first link and the second link. The width of the first opening and the second opening substantially corresponding with the thickness of the first link and the second link is shown in figures 5A, 5B and 5C.

The first fastening element 120 is configured to connect to a third link of the plurality of links of the at least one chain as shown in figure 5D. A fastening element can be understood to mean a part designed to fasten to another element, such as a link of the plurality of links of the at least one chain. The first fastening element 120 is connected to the chain tensioner body 110 with a first connecting part 130. A connecting part can be understood to mean a part designed to connect a first component to a second component. The first fastening element 120 is preferably connected to the chain tensioner body 110 at a distance from the first outer end 111, preferably at the position of the second outer end 112. The first connecting part 130 is preferably substantially elastically non-deformable. The first connecting part 130 is preferably a first fastening chain, as shown in figure 1.

A further embodiment of the chain tensioner comprises a second fastening element 140. The second fastening element 140 is configured to connect to a fourth link of the plurality of links of the at least one chain. The fourth link is situated between the first link and the second link. The second fastening element 140 is connected to the chain tensioner body 110 between the first outer end 111 and the first fastening element 120. The second fastening element 140 is connected to the chain tensioner body 110 with a second connecting part 150. The second connecting part 150 is preferably substantially elastically non-deformable. The second connecting part 150 is preferably a second fastening chain as shown in figure 2.

The chain tensioner 100 as shown in figure 6 can be used in combination with a lever, an exemplary embodiment of which is shown in figure 4, but is not limited thereto.

The chain tensioner 100 as shown in figure 6 can be used in combination with an extension 300, but is not limited thereto.

The chain tensioner is further not limited to the exemplary embodiment shown in figure 6.

The skilled person will appreciate on the basis of the above description that the invention can be embodied in different ways and on the basis of different principles. The invention is not limited here to the above described embodiments. The above described embodiments and the figures are purely illustrative and serve only to increase understanding of the invention. The invention will not therefore be limited to the embodiments described herein, but is defined in the claims.

## Claims

1. Tensioning assembly for tensioning at least one chain, wherein the at least one chain comprises a plurality of links which are respectively connected to each other, the tensioning assembly comprising:
- a chain tensioner comprising a chain tensioner body and a first fastening element connected to the chain tensioner body, wherein a first outer end of the chain tensioner body is provided with a first connecting part and a second connecting part which are situated at a first distance from each other, wherein the first connecting part and the second connecting part are configured to be connected to respectively a first link and a second link of the plurality of links, wherein the chain tensioner body is movable between a first position and a second position;
- wherein in the first position the first link is connectable to the first connecting part and the second link is connectable to the second connecting part;
- wherein, during movement of the chain tensioner body from the first position to the second position, the first connecting part and the second connecting part make the first link and the second link move in opposite directions relative to each other in order to tension the at least one chain;
- and a lever which is connected to the chain tensioner body, wherein the lever is configured to move the chain tensioner body from the first position to the second position and is configured to indicate that the second position has been reached when the lever detects a predetermined tension of the at least one chain, and wherein in the second position the first fastening element is connectable to a third link of the plurality of links in order to secure the chain tensioner in the second position.

2. Tensioning assembly according to claim 1, wherein the chain tensioner body is elongate and extends between the first outer end and a second outer end of the chain tensioner body.

3. Tensioning assembly according to any one of the foregoing claims, wherein the chain tensioner body forms the first connecting part and the second connecting part.

4. Tensioning assembly according to any one of the foregoing claims, wherein the first distance is measured along a longitudinal axis of the chain tensioner body.

5. Tensioning assembly according to any one of the foregoing claims, wherein the first connecting part and the second connecting part form respectively a first recess and a second recess for receiving respectively the first link and the second link.

6. Tensioning assembly according to claim 5, wherein the first recess and the second recess comprise respectively a first opening and a second opening, wherein the first opening and the second opening face in opposite directions.

7. Tensioning assembly according to claim 6, wherein a first dimension of the first opening and the second opening corresponds substantially with respectively a second dimension of the first link and the second link.

8. Tensioning assembly according to any one of the foregoing claims, wherein the first fastening element is connected to the chain tensioner body at a third distance from the first outer end, preferably at the position of the second outer end.

9. Tensioning assembly according to any one of the foregoing claims, wherein the lever is releasably connectable to the chain tensioner body.

10. Tensioning assembly according to any one of the foregoing claims, wherein the lever comprises a lever body, a lever head, a coupling piece and at least one elastic element.
wherein the lever body extends between a first lever body end and a second lever body end;
wherein on one side the lever head is connected pivotally to the first lever body end and is connectable rigidly to the second outer end, and wherein on the other side the lever head is connected to the coupling piece;
wherein the at least one elastic element is configured to exert a predetermined pressure on the coupling piece so that when a torque, which torque is exerted by the lever head on the second outer end or vice versa during the movement from the first position to the second position, exceeds the predetermined pressure, the connection between the coupling piece and the lever head is broken at least partially.

11. Tensioning assembly according to claim 10, wherein the coupling piece comprises an intermediate part and a tilting part, wherein the tilting part is arranged tiltably between the lever head and the intermediate part, wherein the intermediate part is configured to transmit the predetermined pressure to the tilting part and the lever head, wherein the tilting part is configured to tilt when the predetermined pressure is exceeded in order to break the connection between the coupling piece and the lever head at least partially.

12. Tensioning assembly according to claim 10 or 11, wherein the predetermined pressure corresponds with a predetermined desired tension on the chain.

13. Tensioning assembly according to any one of the claims 10-12, wherein the lever head is elongate.

14. Tensioning assembly according to any one of the claims 10-13, wherein the at least one elastic element is a spring.

15. Tensioning assembly according to any one of the claims 10-14, wherein the first lever body end comprises a cavity and the lever head is accommodated partially in the cavity.

16. Tensioning assembly according to any one of the claims 11-15, wherein the lever head further comprises a recess, wherein the recess is configured to receive the tilting part and to enable tilting of the tilting part.

17. Tensioning assembly according to any one of the claims 11-16, wherein the intermediate part comprises a further recess, wherein the further recess is configured to receive the tilting part and to enable tilting of the tilting part.

18. Tensioning assembly according to any one of the foregoing claims, wherein the lever further comprises a handle on the second lever body end, wherein the handle is configured to move the chain tensioner body from the first position to the second position.

19. Tensioning assembly according to any one of the foregoing claims, wherein the lever further comprises a pressure adjusting mechanism, wherein the pressure adjusting mechanism is configured so that the predetermined pressure is adjustable.

20. Tensioning assembly according to any one of the foregoing claims, wherein the chain tensioner further comprises a first connecting part, wherein the first connecting part connects the first fastening element to the chain tensioner body.

21. Tensioning assembly according to claim 20, wherein the first connecting part is substantially elastically non-deformable.

22. Tensioning assembly according to claim 20 or 21, wherein the first connecting part is a first fastening chain.

23. Tensioning assembly according to any one of the foregoing claims, wherein the chain tensioner comprises a second fastening element which is connected to the chain tensioner body between the first outer end and the first fastening element.

24. Tensioning assembly according to any one of the foregoing claims, wherein the chain tensioner further comprises a second connecting part.

25. Tensioning assembly according to claim 24, wherein the second connecting part connects the second fastening element to the chain tensioner body.

26. Tensioning assembly according to claim 24 or 25, wherein the second connecting part is substantially elastically non-deformable.

27. Tensioning assembly according to any one of the claims 24-26, wherein the second connecting part is a second fastening chain.

28. Tensioning assembly according to any one of the foregoing claims, wherein the tensioning assembly further comprises an extension which is arranged between the chain tensioner body and the lever.

29. Tensioning assembly according to claim 28, wherein the extension is releasably connectable to the chain tensioner body.

30. Tensioning assembly according to claim 28 or 29, wherein the extension is releasably connectable to the lever.

31. Tensioning assembly according to any one of the claims 28-30, wherein the extension comprises an extension body, a first coupling element and a second coupling element.

32. Tensioning assembly according to any one of the claims 28-31, wherein the extension body is elongate and extends between a first extension end and a second extension end.

33. Tensioning assembly according to any one of the claims 28-32, wherein the extension body forms the first coupling element and the second coupling element.

34. Tensioning assembly according to any one of the claims 28-33, wherein the first coupling element and the second coupling element are situated at a second distance from each other.

35. Tensioning assembly according to any one of the claims 28-34, wherein in connected state the extension body overlaps partially with the chain tensioner body.

36. Tensioning assembly according to any one of the claims 28-35, wherein the second distance between the first coupling element and the second coupling element amounts to 200 mm to 250 mm, preferably 215 mm to 230 mm.

37. Tensioning assembly according to any one of the claims 28-36, wherein the distance between the first extension end and the second extension end amounts to 600 mm to 1200 mm, preferably 850 mm to 950 mm.

38. Tensioning assembly according to any one of the foregoing claims, wherein the chain tensioner body has a length of 500 mm to 650 mm, preferably of 575 mm to 595 mm.

39. Tensioning assembly according to any one of the foregoing claims, wherein the thickness of the plurality of links of the chain lies between 5 mm and 17 mm, preferably between 9 mm and 13 mm.

40. Chain tensioner for tensioning at least one chain, the chain tensioner comprising: a movable chain tensioner body, wherein the chain tensioner body comprises a first outer end and a second outer end, wherein the first outer end is provided with a first connecting part and a second connecting part which are situated at a distance from each other, wherein the chain tensioner body is movable between a first position and a second position; a first fastening element connected to the chain tensioner body and a lever connected to the body.

41. Method for tensioning at least one chain during securing of a load, wherein the at least one chain comprises a plurality of links which are respectively connected to each other, comprising of:
- providing a tensioning assembly according to any one of the foregoing claims,
- connecting a first link of the plurality of links to the first connecting part,
- connecting a second link of the plurality of links to the second connecting part,
- moving the chain tensioner body from a first position to a second position with the lever, wherein the first connecting part and the second connecting part make the first link and the second link move in opposite directions relative to each other in order to tension the at least one chain,
- detecting a predetermined tension on the at least one chain using the lever,
- indicating, using the lever, when the second position has been reached when the lever detects a predetermined tension of the at least one chain,
- connecting the first fastening element to the third link in order to secure the chain tensioner in the second position.
